# DEMANDE DE BREVET EUROPEEN

(11) **EP 1 922 914 A1**
(43) Date de publication de la demande: **21.05.2008**
(21) Numéro de dépôt: 07291374.2
(22) Date de dépôt: 16.11.2007
(51) Int. Cl.: A01D 34/84, A01D 43/16, A01D 57/01

(54) **Tondeuse à gazon adaptée aux bordures et aux bords en saillie**

(30) Priorité: 16.11.2006 FR 0610037
(71) Demandeur: STELBA, 95270 Belloy en France (FR)
(72) Inventeur: Ponte, Gianfranco, 95270 Belloy en France (FR)
(74) Mandataire: Wagret, Frédéric

(57) **Abrégé**

La présente invention concerne une tondeuse à gazon comportant une structure de support du type châssis (5) et un carter (3) logeant au moins une lame (13), au moins un moyen (2), destiné à couper le gazon (15) situé dans une zone (16) extérieure à la surface de coupe (23) de la lame (13), ce moyen du type volet ou fil (2) étant solidaire d'une paroi latérale (8A, 8B) du carter (3), caractérisée en ce que le moyen (2) est monté mobile à rotation sur la paroi latérale (8A, 8B), entre une position active où il fait saillie par rapport à la paroi latérale (8A, 8B) et une position inactive où il se situe le long de la paroi latérale (8A, 8B).

## Description

La présente invention concerne une tondeuse gazon adaptée aux bordures et aux bords en saillie.

De façon générale, les tondeuses présentent toutes une structure de support contenant à l'intérieur au moins une lame.

Elles peuvent être de tout type, notamment à titre non limitatif, motorisées, équipées d'un siège, présenter des roues, fonctionner sur coussins d'air.

Elles correspondent, chacune, à différentes types de gazons et conviennent à différents types d'utilisation.

A titre d'exemples, des tondeuses sont prévues pour les terrains en pente, pour les petites surfaces, en fonction de la hauteur du gazon, de son humidité, de l'utilisation ou non d'un bac de collecte du gazon coupé.

Cependant, le problème de finition des bordures et des bords en saillie n'est pas envisagé dans les dispositifs des tondeuses actuelles.

Ces dernières coupent le gazon sur toute la longueur de leur lame. Or celle-ci est limitée par la taille du carter à l'intérieur duquel la lame est disposée.

Comme la taille du carter et la configuration des roues et du carter limitent l'avancement de la tondeuse vis-à-vis des bordures et des bords, le gazon n'est pas coupé le long de ces reliefs particuliers.

Ce qui a pour conséquence le recours à des appareils ou outils annexes tels que des dispositifs de finition de bordure du type ciseaux, fils rotatifs, sécateurs.

La présente invention se propose de résoudre ce problème de l'art antérieur à l'aide d'une tondeuse à gazon comportant une structure de support présentant au moins une lame, caractérisée en ce qu'elle comporte au moins un moyen destiné à couper le gazon situé dans une zone extérieure à la surface de coupe de ladite lame.

De plus, le moyen est solidarisé à une paroi latérale d'un carter protégeant la lame de la structure support.

Il est monté à rotation et mobile entre une position active où il fait saillie par rapport à la surface de coupe de ladite lame et une position inactive où il se situe à proximité de la surface de coupe.

Dans un mode de réalisation préféré, le moyen est associé à un évidement latéral du carter et est constitué par exemple d'un volet, d'un fil ou d'un bec.

Des moyens de protection de la lame peuvent être disposés au niveau de l'évidement latéral.

Dans une variante, il est fixé au carter par un moyen de rappel pour esquiver un obstacle.

Ce moyen de rappel peut être, par exemple, un ressort de torsion, ou constitué d'un matériau déformable, tel qu'une bande en caoutchouc.

De la même façon, le moyen peut être en matériau souple déformable à mémoire de forme.

Par ailleurs, le moyen peut être ouvert ou/et fermé par l'actionnement d'une poignée, et peut être disposée sur chaque paroi latérale de la tondeuse.

Dans un mode de réalisation, la tondeuse comporte des roues montées à rotation sur la structure support, un moteur relié à la lame, une bielle située sur le dessus du carter, reliée à une tige par l'intermédiaire d'un ressort et reliée au carter, cette bielle pivotant autour d'un moyen de fixation au carter, le moyen étant relié à la bielle par un axe de rotation, le moyen étant relié au carter par une articulation.

La tondeuse de l'invention permet de réaliser la coupe d'une surface gazonnée en son entier à l'aide d'un seul appareil, et en un seul passage, au lieu de deux dans l'art antérieur.

La présente invention est maintenant décrite à l'aide d'exemples uniquement illustratifs, et nullement limitatifs de la portée de la présente invention, et à partir des dessins suivants dans lesquels :
- La figure 1A représente une vue de dessus de la tondeuse présentant un moyen destiné à la coupe selon l'invention ;
- La figure 1 B représente une vue de détail du moyen selon l'invention ;
- La figure 2A représente un premier mode de réalisation du moyen selon l'invention ;
- La figure 2B représente un deuxième mode de réalisation du moyen selon l'invention ;
- La figure 3A représente une vue partielle en perspective d'une tondeuse pourvue du deuxième mode de réalisation du moyen selon l'invention;
- Les figures 3B et 3C sont des vues de détail, en perspective, du moyen selon l'invention de la figure 3A ;
- Les figures 4A et 4B représentent, en vue de dessus, un schéma de principe du fonctionnement du volet selon l'invention ;
- La figure 5 représente une vue latérale du carter pourvu du moyen selon l'invention ;
- La figure 6A représente un schéma de principe en vue de dessus du volet selon l'invention de la figure 2A;
- La figure 6B représente un mode de réalisation d'un moyen de rappel élastique associé au moyen selon l'invention de l'invention ;
- La figure 6C représente de coté une variante de réalisation du moyen selon l'invention.

Pour la suite de la description, les termes gazon et herbe sont synonymes et la flèche « f » désigne le sens de déplacement de la tondeuse.

Le terme tondeuse désigne tout type de tondeuse comme défini dans le préambule de la description.

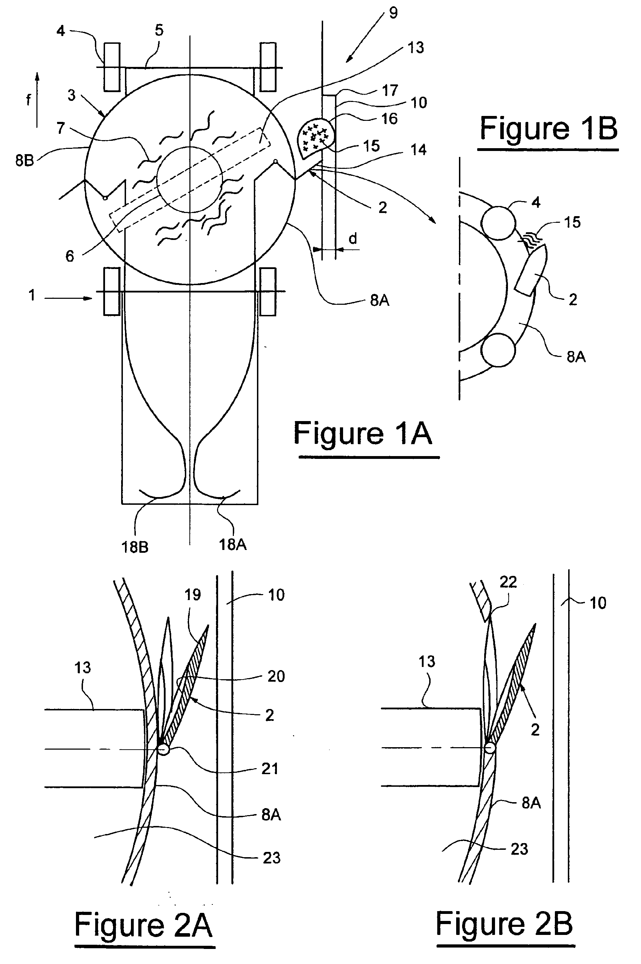

La figure 1A représente une vue de dessus d'une tondeuse 1 présentant un moyen 2 selon l'invention destiné à couper le gazon.

La tondeuse 1 présente un carter 3, quatre roues 4 articulées sur le carter 3 par une structure support du type châssis 5, un moteur 6 disposé sur le dessus 7 du carter 3, et le moyen 2 destiné à couper le gazon situé à l'extérieur du carter 3 sur une paroi latérale 8A ou 8B de ce dernier apte à déplacer le gazon vers la lame 13.

La tondeuse 1 se situe près d'un relief 9 vis-à-vis duquel elle ne peut s'approcher que jusqu'à une certaine distance d, d étant, sur la figure 1, la distance entre un mur 10 et une extrémité du carter 3. Cependant, d peut représenter également la distance entre le mur 10 et une extrémité des roues 4 si les roues 4 présentent, latéralement, une largeur plus grande que la largeur du carter 3.

Une lame 13 est représentée sur la figure 1A en pointillés et a un diamètre légèrement inférieur à la plus grande dimension géométrique du carter 3.

Le moyen 2 permet, par l'amplitude que lui confère sa largeur 14, de courber et déplacer des brins d'herbe 15 de la zone 16 située entre le carter 3 et le long du mur 10 vers le carter 3, la lame 13 de la tondeuse 1 ne pouvant accéder à cette zone 16.

En effet, la lame 13 de la tondeuse 1 ne pourrait y accéder sans ce moyen 2, car le carter 3 ne peut parcourir la distance d, les roues 4 ne passant pas au niveau d'un recoin 17.

Le relief 9 peut présenter d'autres formes notamment des formes courbes, et par exemple, être un parterre de fleurs, un mur, ou tout type de relief ou décaissé, difficile d'accès avec la tondeuse 1.

Le moyen 2 est du type volet ou fil, et permet de déplacer les brins d'herbe 15 par sa largeur 14 et par l'angle qu'il forme avec le carter 3. Il est de plus simple à mettre en place sur le carter 3.

Le moyen 2 peut être actionné par une poignée 18A ou 18B, et est disposé, de façon asymétrique, sur chacune des deux parois latérales 8A et 8B du carter 3.

Cependant, il peut être disposé également de façon symétrique sur chacune des deux parois latérales 8A et 8B, et sur tout le pourtour circulaire des parois latérales 8A et 8B situé entre les roues 4.

Il peut être en matériau rigide ou déformable.

La figure 1 B est une vue de détail du moyen 2 disposé sur une paroi latérale 8A du carter 3, et formant un angle avec celle-ci.

Les figures 2A et 2B illustrent deux modes de réalisation sur lesquelles sont représentés le moyen 2 et une lame 13.

La figure 2A montre un premier mode de réalisation du moyen 2 selon l'invention.

Le moyen 2, dans ce premier mode de réalisation, présente une forme adaptée à déplacer le gazon sur une paroi intérieure 19 et dispose éventuellement d'une partie coupante 20 par cisaillement, notamment du type ciseau, lame.

Le moyen selon l'invention 2 est mobile et articulé au carter 3 par un axe vertical 21, autour duquel il peut pivoter.

Il peut être placé à toute hauteur sur le carter 3.

Il présente un angle avec la paroi latérale 8A du carter 3, en position dite ouverte, et dessinée sur les figures 2A et 2B en traits hachurés, et se situe, en position dite fermée, en traits non hachurés, le long de la paroi latérale 8A du carter 3.

Il est monté en drapeau c'est-à-dire libre en rotation.

Cependant, il peut être choisi fixe par rapport au carter 3 et uniquement présenter un angle par rapport à la paroi latérale 8A.

La partie coupante 20 n'est pas indispensable pour la coupe. Le moyen 2 du fait de sa largeur 14 et de son angle avec la paroi latérale 8A est suffisant pour courber les brins d'herbe 15 vers la surface de coupe 23 de la lame 13 par laquelle ils sont coupés.

La figure 2B montre un deuxième mode de réalisation du moyen 2, ce mode de réalisation étant préféré au premier mode de la figure 2A.

La seule différence avec le premier mode de réalisation de la figure 2A est que le moyen selon l'invention 2 est logé dans un évidement latéral 22 de la paroi 8 du carter 3.

L'évidement latéral 22 aide le déplacement des brins d'herbe 15, au préalable courbés par le moyen 2, vers la surface de coupe 23 de la lame 13. En effet, le moyen 2 solidaire du carter 3 permet d'incliner les brins d'herbe 15 vers la surface 23 du fait de son mouvement de translation vis-à-vis des brins d'herbe 15, ce moyen 2 étant solidaire du carter 3 de la tondeuse 1 qui est déplacée par l'utilisateur.

En plus de son mouvement de translation, il peut être ajouté au moyen 2 une commande qui lui permet de présenter un mouvement de rotation pour courber et déplacer les brins 15 plus efficacement.

Lors de ce mouvement de rotation entre la position ouverte et la position fermée, le moyen 2 déplace les brins d'herbe 15 situés dans la zone 16 située à proximité de la surface de coupe 23 de la lame 13 vers cette surface 23, par l'intermédiaire de l'évidement latéral 22 réalisé dans le carter 3.

De plus, un effet d'aspiration des brins d'herbe 15, du fait de la rotation de la lame 13 dans le carter 3, contribue au déplacement des brins d'herbe 15 à l'intérieur du carter 3.

Il est possible de disposer une partie coupante 20 sur le moyen 2 pour renforcer la coupe des brins d'herbe 15.

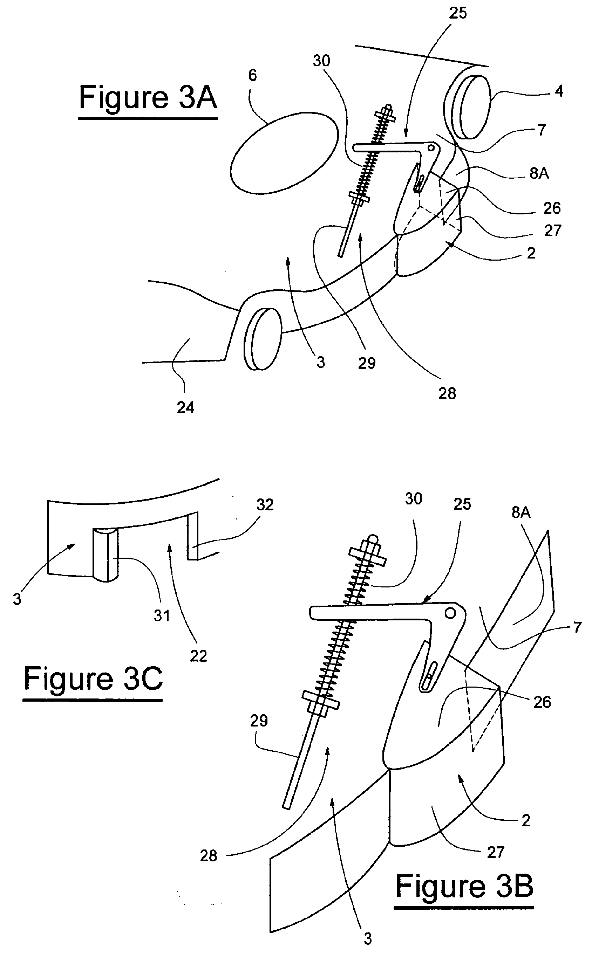

Les figures 3A, 3B et 3C représentent le deuxième mode de réalisation du moyen 2.

La figure 3A représente une vue en perspective de dessus d'une partie de la tondeuse 1.

Un moteur 6, deux roues 4, deux parois du carter 3, une paroi arrière 24 et une paroi latérale 8A, un volet 2 sur la paroi latérale 8A, ainsi qu'un dispositif du type bielle 25, sont représentés sur la figure 3A.

Pour la suite de la description et par souci de simplification, le volet 2 correspond au moyen 2. Toutefois, comme évoqué précédemment, le moyen 2 peut être un fil par exemple en acier ou en caoutchouc ou autres avec flexibilité ou mémoire de forme simple à installer sur les tondeuses, et présenter dans une variante de réalisation une boucle à son extrémité pour respecter la sécurité.

Il est en position fermée sur la figure 3A, c'est-à-dire disposé contre la paroi latérale 8A.

Il présente un profil en forme de L renversée, avec une première branche 26 du L sur le dessus 7 du carter 3 et une deuxième branche 27 du L le long de la paroi latérale 8A du carter 3.

Le volet 2 peut présenter toutes les formes adaptées pour déplacer les brins d'herbe 15 vers la lame 13, et peut être en matériau rigide ou déformable.

Il est situé, sur la figure 3B, sur toute la hauteur de la tondeuse 1, ce qui n'est nullement limitatif, l'essentiel étant que le volet 2 soit résistant à l'utilisation et déplace les brins 15 vers la lame 13, non représentée.

Le volet 2 est associé au dispositif du type bielle 25, comme représenté sur les figures 3A et 3B, qui permet de l'ouvrir ou de le fermer.

Ce dispositif 25 est fixé sur le dessus 7 du carter 3 et est actionné par l'intermédiaire d'une structure 28 du type tige 29 autour de laquelle s'enroule un ressort 30.

La tige 29 qui peut être remplacée par un câble est déplacée en translation par une poignée 18.

Toute autre structure 28 permettant d'ouvrir ou de fermer le volet 2 est envisageable.

La figure 3C montre l'évidement latéral 22 dans lequel se loge le volet 2 en position fermée, non représenté sur cette figure.

Cet évidement latéral 22 peut présenter différentes formes en fonction des résultats souhaités.

Une articulation 31 à laquelle est fixée une extrémité du volet 2, et un emplacement 32 dans lequel l'autre extrémité du volet 2 vient en butée sur une paroi sont représentés.

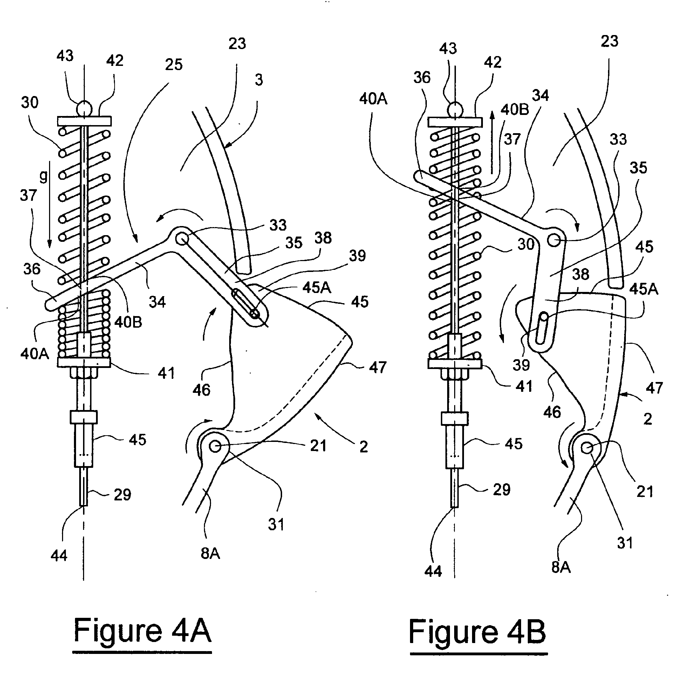

Les figures 4A et 4B représentent, en vue de dessus, un schéma de principe du fonctionnement du volet 2.

Il y est dessiné le volet 2, une bielle 25, le dispositif du type tige 29.

La tige 29 comporte un axe ayant une direction sensiblement égale à celle de la direction « g ».

La figure 4A illustre la position ouverte du volet 2.

La bielle 25 présente une structure en forme de L, renversée sur la figure 4A, solidarisée par un moyen de fixation 33 au carter 3, par exemple, par un système vis-écrou.

La bielle 25 pivote autour de ce moyen de fixation 33.

La bielle 25 présente une première branche 34 du L et une deuxième branche 35 du L, reliées ensemble au niveau du moyen de fixation 33.

La première branche 34 de la bielle 25 comporte à une extrémité 36 un évidement longitudinal 37 qui permet de laisser passer la tige 29, et la deuxième branche 35 comporte à une extrémité 38 un évidement transversal 39 qui permet d'articuler la bielle 25 au volet 2.

Le dispositif du type tige 29 est solidarisé au carter 3 par un moyen de fixation 41 appelé deuxième moyen de fixation, et traverse à l'extrémité 36 de la première branche 34 de la bielle 25 au niveau de l'évidement longitudinal 37.

En effet, autour de la tige 29 est disposé un ressort 30 qui se situe de chaque côté de la première branche 34 de la bielle 25 et qui appuie directement sur une paroi avant 40A et une paroi arrière 40B de cette première branche 34 situées près de l'évidement longitudinal 37, ce qui permet de solidariser la tige 29 à la bielle 25.

Le ressort 30 peut être remplacé par deux ressorts disposés pour le premier entre le moyen de fixation 41 et la paroi avant 40A et pour le second entre la partie arrière 40B et une extrémité 42 de la tige 29, le résultat étant le même les deux ressorts ayant pour fonction de s'opposer au déplacement de la tige 29 suite à l'actionnement de la poignée 18.

Par ailleurs, la tige 29 dispose à la première extrémité 42 d'une bague sertie 43 et est reliée à une deuxième extrémité 44 à une poignée 18 non représentée.

Une gaine 45 entoure la tige 29 afin de la protéger des frottements crées par le contact entre la tige 29 et le deuxième moyen de fixation 41.

Elle est solidarisée à ce dernier par filetage ou par tout moyen, par exemple, du type vis-écrou pour réaliser les réglages du volet 2 et de la tension dans le câble 29 si un câble 29 est utilisé à la place d'une tige 29.

Le volet 2 présente une forme triangulaire et peut présenter toute autre forme.

Il comporte un évidement transversal 39 au niveau de son articulation avec la bielle 25.

Cet évidement transversal 39 est situé à proximité d'une paroi latérale 45 et d'une paroi arrière 46 du volet 2.

Cet évidement transversal 39 est associé à un élément du type cheville 45A, ce qui permet de solidariser la bielle 25 et le volet 2.

Il est possible de conformer l'évidement 39 de telle sorte que le volet 2 puisse s'en détacher lorsque ce dernier rencontre un obstacle.

Par ailleurs, le volet 2 est articulé à la paroi latérale 8A du carter 3 à proximité de la paroi arrière 46 et d'une paroi avant 47 du volet 2 par l'articulation 31 située dans un évidement transversal du carter 3.

Le mécanisme entre les mouvements de la tige 29, de la bielle 25 et du volet 2 est le suivant.

Le pivotement de la première branche 34 du L de la bielle 25 est dû au mouvement de translation de la tige 29 selon la direction g.

Ce pivotement entraîne le pivotement de la deuxième branche 35 du L de la bielle 25 autour du moyen de fixation 33, qui entraîne à son tour, le pivotement du volet 2 autour de l'axe d'articulation 21 du carter 3 décrit en figure 2A, par l'intermédiaire de l'articulation 31.

L'entraînement en translation de la tige 29 résulte de l'actionnement de la poignée 18.

Sur la figure 4A, la poignée 18 est actionnée, ce qui a pour effet de tirer la tige 29 dans le sens de la flèche « g », ce qui entraîne le pivotement de l'armature en L autour du moyen de fixation 33 dans le sens indiqué et le pivotement du volet 2 autour de l'axe d'articulation 21 dans le sens contraire.

Sur la figure 4B, la poignée 18 est relâchée, ce qui a pour effet de déplacer la tige 29 dans le sens opposé à celui de la flèche « g » du fait de l'action du ressort 30, ce qui entraîne le mécanisme inverse de celui décrit sur la figure 4A, et referme le volet 2.

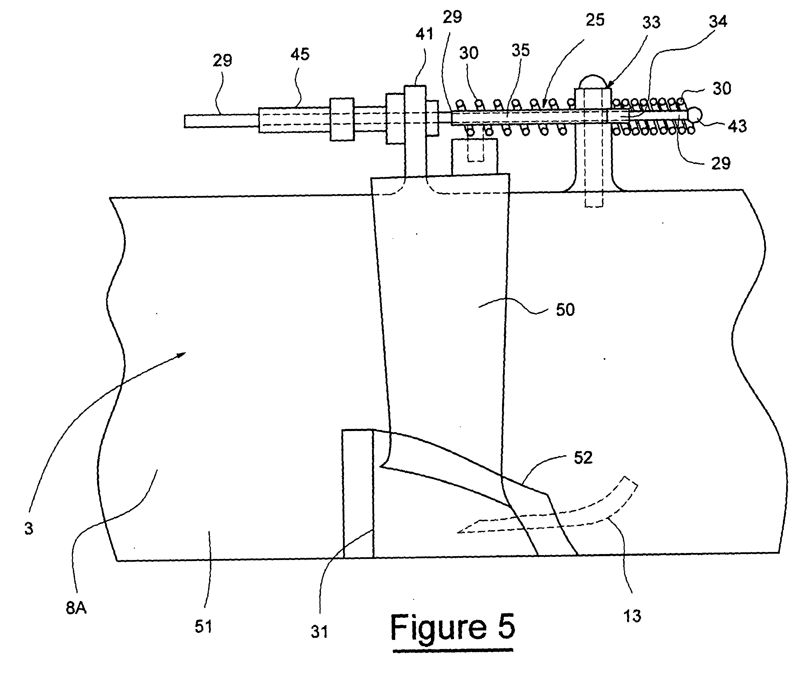

La figure 5 représente une vue latérale du carter 3.

La bielle 25, le dispositif du type tige 29, la lame 13, l'évidement latéral 22 et un élément de liaison 50 reliant le volet 2 à la bielle 25 sont représentés.

La tige 29, sur laquelle s'enroule le ressort 30, se situe derrière le moyen de fixation 33, tandis que la bielle 25 avec les deux branches 34 et 35 se situent devant.

Le volet 2 n'est pas visible sur cette figure et l'élément de liaison 50 reliant le volet 2 à la bielle 25 permet de ne pas fixer directement le volet 2 à la bielle 25. Dans cette variante du deuxième mode de réalisation, le volet 2 est uniquement articulé à l'axe 21 et relié à l'élément de liaison 50.

Des paliers non représentés peuvent être disposés sur la paroi latérale 8A du carter 3 pour guider la rotation de l'élément de liaison 50.

L'évidement dans la paroi latérale 8A du carter 3 présente une forme trapézoïdale, et est situé sur la partie inférieure 51 de la paroi latérale 8A.

Il a un bord supérieur 52 qui est situé au-dessus, selon la hauteur du carter 3, de la position de la lame 13.

Il est possible également de disposer la lame 13 au dessus du bord supérieur 52 de l'évidement latéral 22, à condition que l'évidement soit suffisamment grand pour laisser passer les brins de gazon 15.

En effet, la rotation de la lame 13 et l'effet d'aspiration qu'elle crée sont suffisants pour permettre de couper les brins 15 déplacés par le volet 2 éventuellement situés sous la lame 13 et présentant une longueur qui permet à cette dernière de les couper.

Cette position du bord supérieur 52 a l'avantage de protéger la lame 13 contre les objets qui pourraient passer par l'évidement.

Il est possible de disposer des moyens de protection, par exemple, au centre de l'évidement 22, pour protéger la lame 13 tout en laissant passer les brins d'herbe 15 déplacés par le moyen 2.

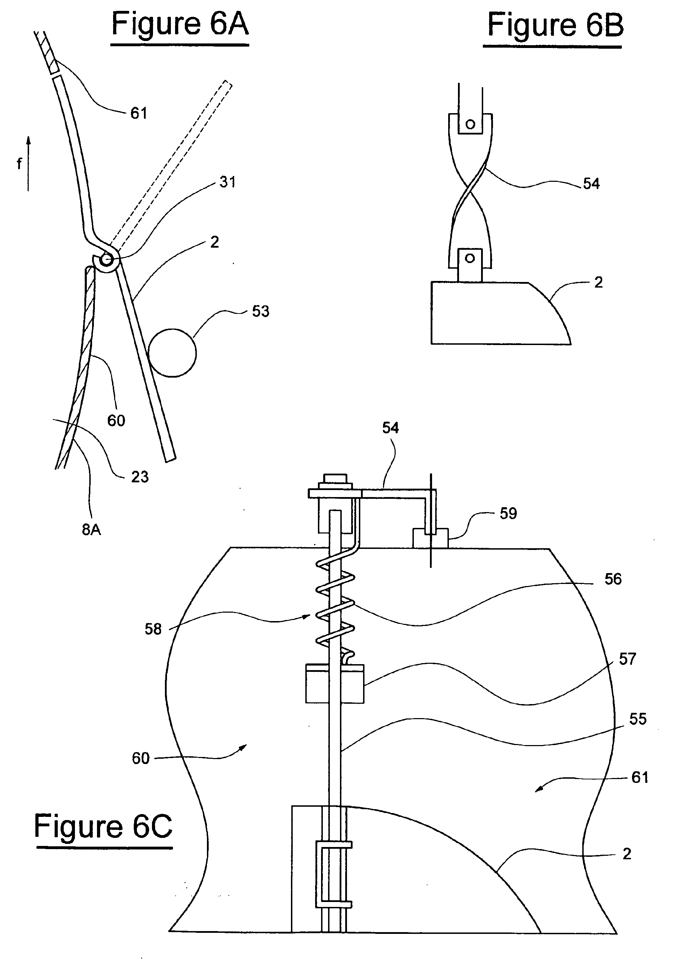

La figure 6A représente un schéma en vue de dessus du volet 2.

Le volet 2 est déplacé vers la paroi latérale 8A amont 60 du fait de la présence d'un obstacle 53 et du déplacement de la tondeuse 1 dans le sens de la flèche f.

La partie amont 60 étant la partie du carter 3 située avant l'articulation 31 lorsque l'on considère le sens de la flèche « f », et la partie avale 61 la partie située après.

La figure 6B représente un mode de réalisation d'un moyen de rappel élastique 54 associé au volet 2.

Le volet 2 peut contourner l'obstacle 53 par l'intermédiaire d'un moyen élastique 54, du type lanière en matériau déformable ou ressort de torsion.

La figure 6C représente de côté une variante de réalisation du volet 2.

La bielle 25 est remplacée par une poignée ou manivelle 54 fixée à une tige 55 cylindrique, elle-même reliée au volet 2 et à la paroi du carter 3.

Un ressort de torsion 56 relie la poignée ou manivelle 54 au carter 3 par un élément en saillie 57 sur la paroi latérale 8A fixé au carter 3 et entoure la tige 55 sur une partie supérieure 58.

Une butée 59 est prévue et permet de bloquer la poignée 18 en position ouverte et laisse libre la rotation de la poignée 18 vers la paroi latérale amont 60 du carter 3 lorsque le volet 2 rencontre un obstacle 53.

Elle peut être un élément situé sur le dessus 7 du carter 3 ou tout moyen permettant la rotation du volet 2 vers la paroi latérale amont 60 du carter 3, et empêchant la rotation du volet 2 vers la paroi latérale avale 61.

Lorsque le volet 2 rencontre un obstacle 53, le volet 2 se déplace vers la paroi latérale amont 60 du carter 3, par l'intermédiaire du ressort de torsion 56, laissant passer l'obstacle 53 pour ensuite se remettre par l'action du ressort 56 dans sa position ouverte initiale bloquée par la butée 59.

## Revendications

1. Tondeuse à gazon comportant une structure de support du type châssis (5) et un carter (3) logeant au moins une lame (13), au moins un moyen (2), destiné à couper le gazon (15) situé dans une zone (16) extérieure à la surface de coupe (23) de la lame (13), ce moyen du type volet ou fil (2) étant solidaire d'une paroi latérale (8A, 8B) du carter (3), **caractérisée en ce que** le moyen (2) est monté mobile à rotation sur la paroi latérale (8A, 8B), entre une position active où il fait saillie par rapport à la paroi latérale (8A, 8B) et une position inactive où il se situe le long de la paroi latérale (8A, 8B).

2. Tondeuse selon la revendication 1, **caractérisée en ce que** le moyen (2) est associé à un évidement latéral (22) du carter (3), le gazon (15) étant coupé par la lame (13) au niveau de la surface de coupe (23).

3. Tondeuse selon l'une des revendications 1 à 2, **caractérisée en ce que** le moyen (2) est fixé au carter (3) par un moyen de rappel élastique (54), de manière à permettre audit moyen (2) d'esquiver un obstacle (53).

4. Tondeuse selon la revendication 2, **caractérisée en ce qu'**elle comporte des roues (4) montées à rotation sur la structure support (5), un moteur (6) relié à la lame (13), une bielle (25) située sur le dessus (7) du carter (3), reliée à une tige (29) par l'intermédiaire d'un ressort (30) et reliée au carter (3), cette bielle (25) pivotant autour d'un moyen de fixation (33) au carter (3), le moyen (2) étant relié à la bielle (25) par un moyen de solidarisation (45A), le moyen (2) étant relié au carter (3) par une articulation (31).

5. Tondeuse selon les revendications 2, 4, **caractérisée en ce que** la lame (13) est au dessus du bord supérieur (52) de l'évidement latéral (22).

6. Tondeuse selon l'une des revendications 1 à 5, **caractérisée en ce que** le moyen (2) est ouvert ou/et fermé par l'actionnement d'une poignée (18).

7. Tondeuse selon la revendication 6, **caractérisée en ce qu'**elle présente un moyen (2) sur chaque paroi latérale (8A, 8B) du carter (3), une poignée (18A, 18B) pour actionner chaque moyen (2).

8. Tondeuse selon les revendications 2, 5, **caractérisée en ce que** des moyens de protection de la lame (13) sont disposées au niveau de l'évidement latéral (22).

9. Tondeuse selon l'une des revendications 1 à 8, **caractérisée en ce que** le moyen (2) présente une partie coupante (20).
